# EUROPEAN PATENT APPLICATION

(11) **EP 2 759 447 A2**
(43) Date of publication of application: **30.07.2014**
(21) Application number: 14150037.1
(22) Date of filing: 02.01.2014
(51) Int. Cl.: B60R 7/04, B60N 2/44, B64D 11/06

(54) **Passenger seat, baggage item and passenger seat/baggage item system**

(30) Priority: 24.01.2013 DE 102013001190; 24.01.2013 US 201361755989 P
(71) Applicant: Airbus Operations GmbH, 21129 Hamburg (DE)
(72) Inventor: Jacobsen, Sönke, 21129 Hamburg (DE); Martin, Jean-Jacques, 21129 Hamburg (DE); Elstner, Steffen, 20253 Hamburg (DE); Krause, Prof. Dr.-Ing., Dieter, 21244 Buchholz (DE)
(74) Representative: Schicker, Silvia

(57) **Abstract**

A passenger seat (10) comprises a backrest (12) and a seat element (14) which is pivotable, relative to said backrest (12), between an inoperative position and a position of use and which comprises a seating face (16) and also a carrier face (18) that faces away from said seating face (16). There is provided on the seat element (14), in the region of the carrier face (18), a first connecting element (42) which is adapted to interact in such a way with a complementary second connecting element (54) provided on a baggage item (48) that said baggage item (48) is fastenable to the seat element (14) in a detachable manner.

## Description

The invention relates to a passenger seat which is suitable for use in the passenger cabin of an aircraft, but also for use in other means of transport, such as buses or trains for example. The invention also relates to a baggage item which is suitable for interacting with a passenger seat of this kind, and also to a passenger seat/baggage item system.

In modern means of transport, particularly in aircraft, optimum utilisation of the space available in a passenger cabin is of great economic importance. The passenger cabin is therefore equipped with as many rows of passenger seats as possible, which are positioned at the smallest possible distances from one another, particularly in economy class. Furthermore, the passengers' baggage is increasingly less frequently transported in the cargo compartment of the aircraft, particularly on short-haul flights, but instead is taken into the passenger cabin with the passengers as hand baggage. Overhead baggage bins, which are arranged above the rows of passenger seats, are usually available for accommodating the items of hand baggage. In addition, items of hand baggage can be stowed away under the passenger seats.

DE 10 2011 122 061, which has not been previously published, describes a passenger seat which comprises a backrest and also a seat. The seat of the passenger seat comprises a first section and also a second section which is foldable, relative to the first section, towards the backrest. Attached to the second section of the seat is a holder which is movable, relative to a surface of the second section of the seat, between a first operating position and a second operating position. In its first operating position, the holder extends substantially parallel to the surface of the second section of the seat. In its second operating position, on the other hand, the holder extends at an angle of about 60° to 120° relative to the surface of the second section of the seat. When said second section of the seat is in an operating position in which it is folded towards the backrest, a baggage item can be stowed away under the seat of the passenger seat system. The holder can then be brought into its second operating position, so that it adjoins the baggage item stowed away under the seat, as soon as the second section of the seat is folded down. As a result, the holder prevents the baggage item stowed away under the seat from moving out of place.

The underlying object of the invention is to make available a passenger seat which permits simple, convenient and space-saving accommodation of baggage items and thereby optimisation of the use of space within the passenger cabin of an aircraft or other means of transport. The underlying object of the invention is also to indicate a baggage item which is suitable for interacting with a passenger seat of this kind, and also a passenger seat/baggage item system.

This object is achieved by means of a passenger seat having the features of claim 1, a baggage item having the features of claim 6 and also a passenger seat/baggage item system having the features of claim 12.

A passenger seat according to the invention comprises a backrest and also a seat element which is pivotable, relative to said backrest, between an inoperative position and a position of use. The seat element comprises a seating face and also a carrier face that faces away from said seating face. When the seat element is in its inoperative position, it is preferably oriented at an angle of less than 45° and, in a particularly preferred manner, substantially parallel to the backrest of the passenger seat, the seating face of the seat element preferably facing towards a front side of the backrest and the carrier face of said seat element preferably facing away from said front side of the backrest. In its position of use, the seat element preferably extends at an angle of about 80 to 100° and, in a particularly preferred manner, substantially perpendicularly to the backrest of the passenger seat.

If desired, the backrest of the passenger seat may be adjustable between an upright position, in which the angle between the backrest and the seat element, i.e. the angle between the front side of the backrest and the seating face of the seat element, amounts to about 80 to 100°, and a reclined position. When the backrest is in its reclined position, the angle between the backrest and the seat element, i.e. the angle between the front side of the backrest and the seating face of the seat element, is preferably greater than 100°.

When the seat element of the passenger seat is in its inoperative position, said passenger seat occupies a smaller area than in an operating situation, in which said seat element is in its position of use. When the passenger seat is integrated into rows of seats arranged one behind another, such as can be found in the passenger cabin of an aircraft for example, the free space that exists between the passenger seat and a row of seats arranged in front of said passenger seat is consequently increased as a result of the adjustment of the seat element from its position of use into its inoperative position. Naturally, this also applies when the passenger seat is positioned behind a monument, for example a partition or the like. When the seat element is in its inoperative position, a passenger can consequently easily stand in front of the passenger seat.

If the passenger seat is used in a means of transport, for example a train, a bus or an aircraft, this prevents the passenger having to leave his row of seats and step out into the aisle when it is necessary, for example, to allow a passenger sitting on an adjacent passenger seat to gain access to his place or to leave it. It is thereby possible to shorten the boarding and disembarking cycles, the length of which has a major influence on the operating costs of the aircraft, particularly when operating large commercial aircraft. In addition, simplified cleaning of the passenger cabin is possible when the seat element of the passenger seat is in its inoperative position.

A first connecting element is provided on the seat element in the region of the carrier face. Said first connecting element is adapted to interact in such a way with a complementary second connecting element provided on a baggage item that the baggage is fastenable to the seat element in a detachable manner. The baggage item in question may be any desired baggage item, such as a small suitcase or a trolley for example. All that is essential is that the baggage item has a shape and size such that it is suitable for fastening to the seat element of the passenger seat and for accommodation under said seat element when the latter is in its position of use.

As a result of the interaction of the first connecting element provided on the seat element with the second connecting element provided on the baggage item, said baggage item can be fastened to the seat element in a detachable manner, preferably irrespective of the position of said seat element. Particularly easy and convenient fastening of the baggage item to the seat element is possible, however, when said seat element is in its inoperative position and the carrier face of said seat element is thereby freely accessible. The seat element, together with the baggage item fastened to it, can then be pivoted, relative to the backrest of the passenger seat, into its position of use, as a result of which the baggage item is arranged under the seat element.

As a result of the interaction of the first connecting element with the second connecting element, the baggage item is reliably prevented from moving out of place. The passenger seat thus permits convenient and space-saving accommodation of baggage items, and thereby optimisation of the use of space within the passenger cabin of an aircraft or other means of transport. In addition, it is no longer necessary for the passengers to search for free spaces for their items of hand baggage in overhead baggage bins arranged above the rows of passenger seats. This simplifies the boarding process for the passengers and consequently further shortens the boarding and disembarking cycles. Finally, the baggage item no longer has to be strenuously liflted into an overhead baggage bin, but can be fastened to the seat element of the passenger seat at waist height in an ergonomically favourable, convenient manner.

In principle, any desired design of the first connecting element and second connecting element is conceivably possible, so long as the said first and second connecting elements are suitable for providing for detachable connection of the baggage item to the seat element of the passenger seat. For example, the first and second connecting elements may be embodied in the form of suitable complementary latching elements. However, particularly convenient fastening of the baggage item to the seat element of the passenger seat is possible if the first connecting element comprises a first rail element which is adapted to interact with a second rail element of the second connecting element in order to fasten the baggage item to the seat element in a detachable manner. The interaction of the first rail element with the second rail element permits guided pushing of the baggage item onto the seat element of the passenger seat. In addition, secure fastening of the baggage item to said seat element is achieved.

The first rail element of the first connecting element may extend from a first edge section of the carrier face, which first edge section borders on the backrest, towards a second edge section of said carrier face, which second edge section faces away from said backrest. When the passenger seat is in the condition in which it is installed in a passenger cabin of a means of transport, particularly an aircraft, the first rail element of the first connecting element then extends in a substantially vertical direction when the seat element is in its inoperative position. The baggage item can then be detachably fastened to the seat element in a particularly convenient manner by slipping said baggage item downwards onto said seat element from above. The first rail element of the first connecting element preferably ends at a distance from that second edge section of the carrier face which faces away from the backrest. This distance may amount, for example, to about 10 to 30% of the length of the carrier face from a first edge that borders on the backrest as far as a second edge that faces away from said backrest.

The first connecting element may also comprise a first locking element which is adapted to interact with a second locking element of the second connecting element, in order to lock the baggage item in its fastening position on the seat element in a detachable manner. For example, the first locking element of the first connecting element may pass into engagement with the second locking element of the second connecting element when the baggage item has reached a predetermined position relative to the seat element of the passenger seat, for example when the baggage item assumes a position, relative to said seat element, such that the first rail element of the first connecting element is in engagement, along a predetermined length, with the second rail element of the second connecting element. As a result of the interaction of the first locking element with the second locking element, the baggage item can be held particularly securely in its fastening position on the seat element. This guarantees, for example, that the baggage item does not detach itself from said seat element, even in the event of turbulence or the like.

The passenger seat may also comprise a manually actuatable releasing element. Said releasing element may be adapted to bring the first and the second locking element out of engagement, in response to manual actuation, and thereby to permit detachment of the baggage item from its fastening position on the seat element. The releasing element may comprise, for example, a manually actuatable lever.

In one preferred embodiment, the passenger seat comprises a carrier pedestal. Said carrier pedestal may be designed, for example, in the form of a carrier beam. The carrier pedestal may be exclusively associated with the passenger seat. However, said carrier pedestal is preferably associated with a plurality of passenger seats arranged in a row of passenger seats. The carrier pedestal may comprise a first fastening arrangement which is adapted to interact with a complementary fastening arrangement of the backrest of the passenger seat. Furthermore, the carrier pedestal may comprise a second fastening arrangement which is adapted to interact with a complementary fastening arrangement of the seat element. In addition, the carrier pedestal may be provided with a third fastening arrangement which is adapted to interact with a complementary fastening arrangement of an enlarged seat element. The third fastening arrangement may be a fastening arrangement which is constructed separately from the second fastening arrangement. As an alternative to this, however, the third fastening arrangement may also be formed by two second fastening arrangements which are provided side by side on the carrier pedestal.

Furthermore, the carrier pedestal may comprise a fourth fastening arrangement which is adapted to interact with a complementary fastening arrangement of an armrest. Finally, it is conceivably possible to equip the carrier pedestal with a fifth fastening arrangement which is adapted to interact with a complementary fastening arrangement of a table or a baby bassinet. As a result of the interaction of the fastening arrangements of the carrier pedestal with the respective complementary fastening arrangements of the backrest, seat element, enlarged seat element, armrest, table and/or baby bassinet, said backrest, seat element, enlarged seat element, armrest, table and/or baby bassinet can be fastened to the carrier pedestal in a detachable manner. It is thereby possible to bring about a modular composition of the passenger seat or of a row of passenger seats. A passenger seat, or row of passenger seats, which is assembled in a modular manner in this way, is particularly easy to convert. For example, the seat elements of two adjacent passenger seats can be replaced by an enlarged seat element if necessary. Furthermore, it is conceivably possible, for example, to replace a middle passenger seat in a row comprising three passenger seats by a table, if the row of passenger seats is to be allocated to business class.

If desired, the fastening arrangements provided on the barrier base may each be constructed in the form of standardised interfaces which are capable of interacting, as required, with a fastening arrangement, which is likewise constructed in the form of a standardised interface, of a backrest, seat element, enlarged seat element, armrest, table and/or baby bassinet, in order to connect said backrest, seat element, enlarged seat element, armrest, table and/or baby bassinet to the carrier pedestal. If desired or necessary, it is also possible to provide two or more interface standards for components which are exposed to loadings of different weight or intensity and which are to be connected to the carrier pedestal.

The carrier pedestal is preferably suitable for carrying lines, for example electrical lines or data lines. For example, said carrier pedestal may have a cavity through which the desired lines may be routed and consequently supplied to the individual passenger seats belonging to a row of passenger seats. In the region of the individual passenger seats, the lines routed through the carrier pedestal may then serve to supply electrical components of the passenger seat with power or to connect entertainment systems provided on the passenger seats.

A passenger seat which is assembled in a modular manner in this way and has a carrier pedestal may be a passenger seat which has, as described above, a seat element on which there is provided, in the region of its carrier face, a first connecting element which is adapted to interact in such a way with a complementary second connecting element provided on a baggage item that said baggage item is fastenable to the seat element in a detachable manner. However, a passenger seat which is assembled in a modular manner and has a carrier pedestal can also be produced and claimed independently of these features. In other words, a passenger seat which is assembled in a modular manner and has a carrier pedestal may also comprise only a backrest as well as a seat element of which no further details are specified. All that is then essential is that the carrier pedestal comprises at least one fastening arrangement which is adapted to interact with a complementary fastening arrangement of the backrest, the seat element, an enlarged seat element, an armrest, and/or a table, in order to connect said backrest, seat element, enlarged seat element, armrest, and/or table to the carrier pedestal in a detachable manner.

A baggage item according to the invention comprises a main body which has a connecting face. Provided on said main body, in the region of the connecting face, is a second connecting element which is adapted to interact in such a way with a complementary first connecting element provided in the region of a carrier face of a seat element of a passenger seat that the baggage item is fastenable to said seat element in a detachable manner. The baggage item according to the invention is consequently specifically designed for interacting with an above-described passenger seat and can therefore be stowed away, in a particularly easy, convenient and space-saving manner, in a passenger cabin, which is equipped with an above-described passenger seat, of a means of transport, particularly an aircraft. The baggage item in question may be any desired baggage item, such as a small suitcase or a trolley for example, which has a shape and size such that said baggage item is suitable for fastening to the seat element of the passenger seat and for accommodation under said seat element.

The second connecting element may comprise a second rail element which is adapted to interact with a first rail element of the first connecting element in order to fasten the baggage item to the seat element in a detachable manner.

The second rail element may extend from a first edge section of the connecting face, which first edge section faces towards a backrest of the passenger seat when the baggage item is fastened to the seat element of said passenger seat, towards a second edge section of the connecting face, which second edge section faces away from the backrest of the passenger seat when the baggage item is fastened to the seat element of said passenger seat. Such a design of the second rail element makes it possible for the baggage item to be pushed downwards onto the seat element from above in an easy and convenient manner, in order to bring said second rail element of the second connecting element into engagement with the first rail element of the first connecting element and to thereby fasten the baggage item to the seat element in a detachable manner.

The second rail element of the second connecting element preferably ends at a distance from that edge section of the connecting face which faces towards the backrest of the passenger seat when the baggage item is fastened to the seat element of said passenger seat. This distance may amount, for example, to about 10 to 30% of the length of the connecting face from a first edge, which faces towards the backrest of the passenger seat when the baggage item is fastened to the seat element of said passenger seat, as far as a second edge which faces away from the backrest of the passenger seat when the baggage item is fastened to the seat element of said passenger seat.

The second connecting element of the baggage item may comprise a second locking element which is adapted to interact with a first locking element of the first connecting element, in order to lock the baggage item in its fastening position on the seat element in a detachable manner.

Furthermore, there may be present, on the baggage item, a manually actuatable releasing element which unlocks the second locking element of the second connecting element from the first locking element of the first connecting element in response to manual actuation, and thereby permits detachment of the baggage item from its fastening position on the seat element. In principle, it is possible for both the passenger seat and the baggage item to be equipped with a manually actuatable releasing element. If desired, however, it is also possible for only the passenger seat or only the baggage item to comprise a manually actuatable releasing element.

In one preferred embodiment, the baggage item also comprises a drawer which is displaceable, relative to the main body, between a first position in which said drawer is received within said main body and a second position in which said drawer protrudes out of said main body. The drawer is preferably arranged in the region of an edge face of the main body which borders on the connecting face and which faces away from the backrest of the passenger seat when the baggage item is fastened to the seat element of said passenger seat. When the baggage item is fastened to said seat element of the passenger seat, and said seat element of the passenger seat is in its position of use, the edge face of the main body in which the drawer is arranged is consequently arranged underneath a front edge face of the seat element and is thus easily accessible to a passenger sitting on the passenger seat. The drawer may accommodate articles which are to be accessible to the passenger while he is sitting on the passenger seat, without it being necessary to detach the baggage item from the seat element.

The main body of the baggage item may also comprise a flap which is pivotable between a first position in which said flap closes the main body, and a second position in which the flap provides access to an inner compartment of said main body. In its second position, the flap preferably unblocks an opening in a face of the main body which faces away from the carrier face of the seat element when the baggage item is fastened to said seat element of the passenger seat. That face of the main body in which the flap unblocks an opening when in its second position preferably extends substantially parallel to the connecting face of the main body to which the second connecting element is attached. Such a configuration of the baggage item permits access into the inner compartment of the main body even when said baggage item is fastened to the seat element of the passenger seat.

A passenger seat/baggage item system according to the invention comprises an above-described passenger seat and also an above-described baggage item.

An above-described passenger seat, an above-described baggage item and/or an above-described passenger seat/baggage item system is/are particularly suitable for use in a passenger aircraft.

A preferred embodiment of the invention will now be explained in greater detail with the aid of the appended schematic drawings, in which
- Figure 1: shows, in an exploded representation, the basic composition of a row of seats comprising a passenger seat;
- Figure 2: shows a section of a passenger cabin of an aircraft, in which two rows of passenger seats are arranged, each comprising three passenger seats;
- Figure 3: shows a three-dimensional, detailed representation of a row of passenger seats according to Figure 2;
- Figure 4: shows a representation of a baggage item which is suitable for fastening to a passenger seat according to Figure 3;
- Figure 5: shows a baggage item according to Figure 4, a flap belonging to said baggage item being located in a position in which said flap provides access to an inner compartment of a main body of said baggage item;
- Figure 6: illustrates the fastening of the baggage item according to Figures 4 and 5 to a passenger seat according to Figure 3; and
- Figure 7: shows a side view of a passenger seat according to Figure 3 with a baggage item according to Figures 4 and 5 fastened to it.

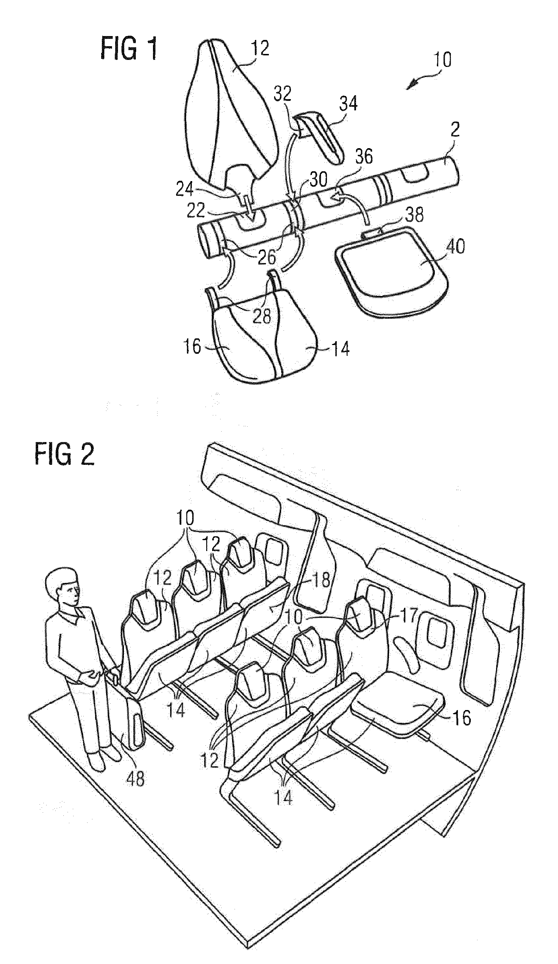

Figure 1 illustrates the basic composition of a row of passenger seats comprising a plurality of passenger seats 10, which row is intended for installation in an aircraft passenger cabin, see Figure 2. In the section of an aircraft passenger cabin illustrated in Figure 2, two rows, each having three passenger seats 10, are arranged one behind the other. Each of the passenger seats 10 of a row of passenger seats comprises a backrest 12 and also a seat element 14.

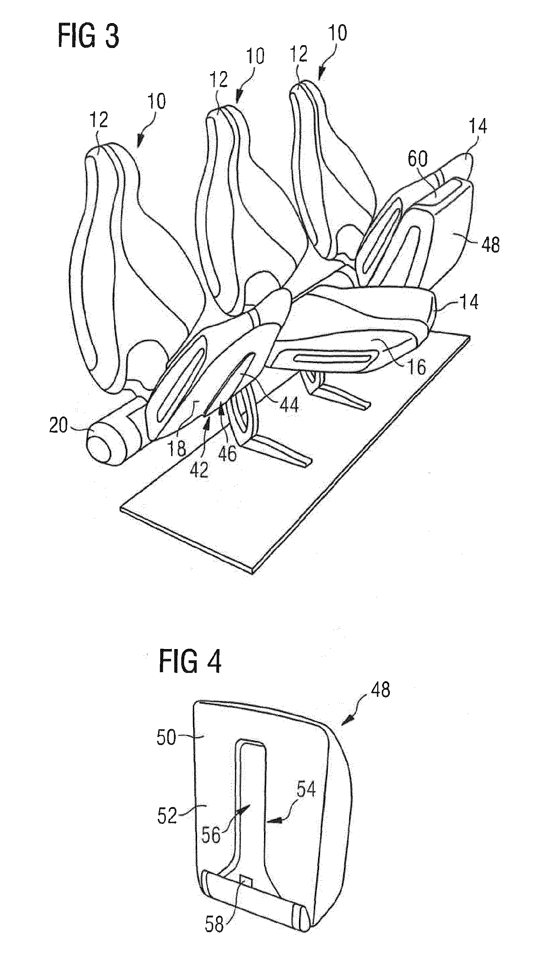

The seat element 14 is pivotable, relative to the backrest 12, between an inoperative position and a position of use and comprises a seating face 16 and also a carrier face 18 that faces away from said seating face 16. When the seat element 14 is in its inoperative position, it is arranged in a folded-up position with respect to the backrest 12, i.e. at an angle of less than 45° relative to said backrest 12. Under these circumstances, the seating face 16 of the seat element 14 faces towards a front side of the backrest 12. In its position of use, on the other hand, the seat element 14 extends substantially perpendicularly to the backrest 12 of the passenger seat 10. In the representation shown in Figure 3 of a row of passenger seats comprising three passenger seats 10, the seat element 14 of the middle passenger seat 10 is in its position of use, whereas the seat elements 14 of the two passenger seats 10 on the edges are in their inoperative position.

As can be seen from Figure 1, each row of passenger seats comprises a carrier pedestal 20. Said carrier pedestal 20 is provided with a first fastening arrangement 22 which is adapted to interact with a complementary fastening arrangement 24 of the backrest 12, in order to connect said backrest 12 to the carrier pedestal 20 in a detachable manner. The carrier pedestal 20 also has a second fastening arrangement 26 which is adapted to interact with a complementary fastening arrangement 28 of the seat element 14 in order to fasten said seat element 14 to the carrier pedestal in a detachable manner. If desired, two second fastening arrangements 26, which are provided side by side on the carrier pedestal 20 and which usually serve to connect the two seat elements of two mutually adjacent passenger seats 10 of a row of passenger seats to said carrier pedestal 20, may also be used to fasten an enlarged seat element (not shown in the drawings) to the carrier pedestal 20 in a detachable manner. Two mutually adjacent second fastening arrangements 26 of the carrier pedestal 20 then form a third fastening arrangement which is adapted to interact with a complementary fastening arrangement of the enlarged seat element, in order to connect said enlarged seat element to the carrier pedestal 20 in a detachable manner.

The carrier pedestal 20 also has a fourth fastening arrangement 30, which is adapted to interact with a complementary fastening arrangement 32 of an armrest 34, in order to connect said armrest 34 to the carrier pedestal 20 in a detachable manner. If desired, the carrier pedestal 20 for each passenger seat 10 may be provided with two fourth fastening arrangements 30, so that each passenger seat 10 can be provided with two armrests 34. Finally, there is provided on the carrier pedestal 20 a fifth fastening arrangement 36 which is adapted to interact with a complementary fastening arrangement 38 of a table 40, in order to connect said table 40 to the carrier pedestal 20 in a detachable manner.

As a result of a modular composition of this kind, each passenger seat 10 or each row of passenger seats can be particularly easily and flexibly converted. For example, it is possible to remove the middle passenger seat 10 belonging to a row of passenger seats, i.e. to detach the backrest 12, the seat element 14 and also the armrests 34 of the passenger seat 10 from the carrier pedestal 20 and to fasten a table 40 to said carrier pedestal 20 instead. In this way, the row of passenger seats can be easily and rapidly converted from a row of passenger seats allocated to economy class to a row of passenger seats allocated to business class.

The carrier pedestal 20 is provided with a cavity which is not illustrated in the drawings. Electrical lines and data lines, which supply electrical equipment provided on the passenger seats 10 with power or connect entertainment systems provided on said passenger seats 10 to the data network of the aircraft, may be routed through this cavity.

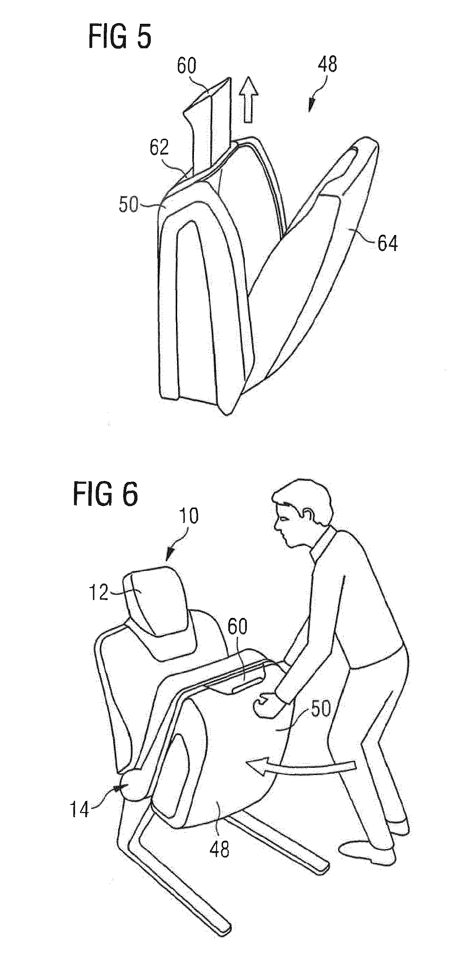

As is most clearly visible in Figure 3, a first connecting element 42 is provided on the seat element 14 of each passenger seat 10 in the region of the carrier face 18. Said first connecting element 42 comprises a first rail element 44 which extends from a first edge section of the carrier face 18, which first edge section borders on the backrest 12, towards a second edge section of said carrier face 18, which second edge section faces away from said backrest 12. The first connecting element 42 also has a first locking element 46. Said first connecting element 42 serves to fasten a baggage item 48 to the seat element 14 of the passenger seat 10 in a detachable manner, see Figures 4 and 5.

As can be seen from Figures 4 and 5, the baggage item 48 comprises a main body 50 which has a connecting face 52. A second connecting element 54 is provided in the region of said connecting face 52. Said second connecting element 54 is adapted to interact in such a way with the first connecting element 42 provided in the region of the carrier face 18 of the seat element 14 of the passenger seat 10 that the baggage item 48 is fastenable to said seat element 14 of the passenger seat 10 in a detachable manner, as shown in Figure 6. The first connecting element 42 and the second connecting element 54 are consequently embodied as complementary connecting elements which can be brought into engagement with one another in order to fasten the baggage item 48 to the seat element 14 of the passenger seat 10 in a detachable manner.

In particular, the second connecting element 54 of the baggage item 48 has a second rail element 56 which is adapted to interact with the first rail element 44 of the first connecting element 42 in order to fasten the baggage item 48 to the seat element 14 of the passenger seat 10 in a detachable manner. Said second rail element 56 extends from a first edge section of the connecting face 52, which first edge section faces towards the backrest 12 of the passenger seat 10 when the baggage item 48 is fastened to the seat element of said passenger seat 10, towards a second edge section of the connecting face 52, which second edge section faces away from the backrest 12 of the passenger seat 10 when the baggage item 48 is fastened to the seat element 14 of said passenger seat 10.

Consequently, all that is necessary for the purpose of fastening the baggage item 48 to the seat element 14 of the passenger seat 10 is to push said baggage item 48 downwards from above onto said seat element 14 which is located in its inoperative position. Under these circumstances, the first rail element 44 of the first connecting element 42 and the second rail element 56 of the second connecting element 52 come into engagement with one another, which permits guided displacement of the baggage item 48, relative to the seat element 14 of the passenger seat 10, until said baggage item 48 has reached the desired fastening position.

The second connecting element 54 of the baggage item 48 also has a second locking element 58. When said baggage item 48 has reached the desired fastening position on the seat element 14, the second locking element 58 of the second connecting element 54 locks with the first locking element 46 of the first connecting element 42, as a result of which the baggage item 48 is held securely in its fastening position. The bringing of the first and second locking elements 46, 58 out of engagement is possible by manual actuation of a manually actuatable releasing element which is not shown in the drawings, it being possible to equip the passenger seat 10 and/or the baggage item 48 with a manually actuatable releasing element. When the second locking element 58 is detached from the first locking element 46, the baggage item 48 can be displaced again, relative to the seat element 14, and finally detached from said seat element 14.

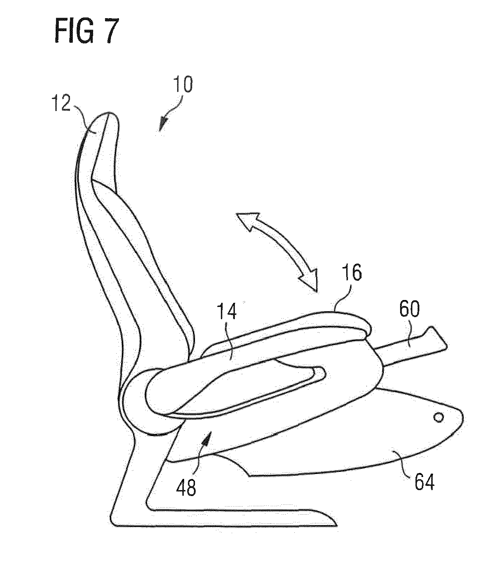

When the baggage item 48 is in its fastening position on the seat element 14, said seat element 14 can be pivoted, i.e. folded downwards, relative to the backrest 12 of the passenger seat 10, out of its inoperative position illustrated in Figure 6 and into its position of use shown in Figure 7. When the seat element 14 is in its position of use, the baggage item 48 is arranged underneath said seat element 14 in a space-saving manner, although a clear space for feet is still left underneath said baggage item 48.

The baggage item 48 also comprises a drawer 60, see Figures 5 and 7, which is displaceable, relative to the main body 50, between a first position in which said drawer 60 is received into the main body 50, and a second position in which said drawer 60 protrudes out of said main body 50. The drawer 60 is arranged in the region of an edge face 62 of the main body 50 which borders on the connecting face 52 and which faces away from the backrest 12 of the passenger seat 10 when the baggage item 48 is fastened, as shown in Figure 7, to the seat element 14 of the passenger seat 10. In its second position, the drawer 60 is then easily accessible to a passenger sitting on the passenger seat 10.

The main body 50 of the baggage item 48 also comprises a flap 64 which is pivotable between a first position in which said flap 64 closes the main body 50, and a second position in which said flap 64 provides access to an inner compartment of the main body 50. In its second position, the flap 64 unblocks an opening in a face of the main body 50 which faces away from the carrier face 18 of the seat element 14 when the baggage item 48 is fastened to said seat element 14 of the passenger seat 10. Consequently, it is possible to open the baggage item 48, as shown in Figure 7, even when said baggage item 48 is fastened to the seat element 14 of the passenger seat 10.

## Claims

1. Passenger seat (10) having:
- a backrest (12) and
- a seat element (14) which is pivotable, relative to said backrest (12), between an inoperative position and a position of use and which comprises a seating face (16) and also a carrier face (18) that faces away from said seating face (16), **characterised in that** there is provided on the seat element (14), in the region of the carrier face (18), a first connecting element (42) which is adapted to interact in such a way with a complementary second connecting element (54) provided on a baggage item (48) that said baggage item (48) is fastenable to the seat element (14) in a detachable manner.

2. Passenger seat according to Claim 1,
**characterised in that** the first connecting element (42) comprises a first rail element (44) which is adapted to interact with a second rail element (56) of the second connecting element (54) in order to fasten the baggage item (48) to the seat element (14) in a detachable manner.

3. Passenger seat according to Claim 2,
**characterised in that** the first rail element (44) of the first connecting element (42) extends from a first edge section of the carrier face (18), which first edge section borders on the backrest (12), towards a second edge section of said carrier face (18), which second edge section faces away from said backrest (12).

4. Passenger seat according to one of Claims 1 to 3,
**characterised in that** the first connecting element (42) comprises a first locking element (46) which is adapted to interact with a second locking element (58) of the second connecting element (54), in order to lock the baggage item (48) in its fastening position on the seat element (14) in a detachable manner.

5. Passenger seat according to one of Claims 1 to 4,
**characterised by** a carrier pedestal (20) having at least one fastening arrangement (22, 26, 30, 36) which is adapted to interact with a complementary fastening arrangement (24, 28, 32, 38) of the backrest (12), the seat element (14), an enlarged seat element, an armrest (34) and/or a table (40) in order to connect the backrest (12), the seat element (14), the enlarged seat element, the armrest (34) and/or the table (40) to the carrier pedestal (20) in a detachable manner.

6. Baggage item (48) having:
- a main body (50) which has a connecting face (52),
**characterised in that** there is provided on the main body (50), in the region of the connecting face (52), a second connecting element (54) which is adapted to interact in such a way with a complementary first connecting element (42) provided in the region of a carrier face (18) of a seat element (14) of a passenger seat (10) that the baggage item (48) is fastenable to said seat element (14) in a detachable manner.

7. Baggage item according to Claim 6,
**characterised in that** the second connecting element (54) comprises a second rail element (56) which is adapted to interact with a first rail element (44) of the first connecting element (42) in order to fasten the baggage item (48) to the seat element (14) in a detachable manner.

8. Baggage item according to Claim 7,
**characterised in that** the second rail element (56) extends from a first edge section of the connecting face (52), which first edge section faces towards a backrest (12) of the passenger seat (10) when the baggage item (48) is fastened to the seat element (14) of said passenger seat (10), towards a second edge section of the connecting face (52), which second edge section faces away from the backrest (12) of the passenger seat (10) when the baggage item (48) is fastened to the seat element (14) of said passenger seat (10).

9. Baggage item according to one of Claims 6 to 8,
**characterised in that** the second connecting element (54) comprises a second locking element (58) which is adapted to interact with a first locking element (46) of the first connecting element (42) in order to lock the baggage item (48) in its fastening position on the seat element (14) in a detachable manner.

10. Baggage item according to one of Claims 6 to 9,
**characterised by** a drawer (60) which is displaceable, relative to the main body (50), between a first position in which said drawer (60) is received within the main body (50), and a second position in which said drawer (60) protrudes out of said main body (50), said drawer (60) being arranged in the region of an edge face (62) of the main body (50) which borders on the connecting face (52) and which faces away from the backrest (12) of the passenger seat (10) when the baggage item (48) is fastened to the seat element (14) of said passenger seat (10).

11. Baggage item according to one of Claims 6 to 10,
**characterised in that** the main body (50) comprises a flap (64) which is pivotable between a first position in which said flap (64) closes the main body (50), and a second position in which said flap (64) provides access to an inner compartment of the main body (50), said flap (64) unblocking, in its second position, an opening in a face of the main body (50) which faces away from the carrier face (18) of the seat element (14) when the baggage item (48) is fastened to said seat element (14) of the passenger seat (10).

12. Passenger seat/baggage item system having:
- a passenger seat (10) according to one of Claims 1 to 5 and
- a baggage item (48) according to one of Claims 6 to 11.

13. Use of a passenger seat (10) according to one of Claims 1 to 5, a baggage item (48) according to one of Claims 6 to 11 and/or a passenger seat/baggage item system according to Claim 12 in a passenger aircraft.
